# FASCICULE DE BREVET EUROPEEN

(11) **EP 3 210 378 B1**
(45) Date de publication et mention de la délivrance du brevet: **04.11.2020**
(21) Numéro de dépôt: 15798312.3
(22) Date de dépôt: 22.10.2015
(51) Int. Cl.: H04N 13/257, H04N 13/279, H04N 13/275, H04N 13/344, H04N 13/383, H04N 13/398, H04N 13/282

(54) **MÉTHODE POUR COLLECTER DES DONNÉES D'IMAGES DESTINÉES À PRODUIRE UNE VIDÉO IMMERSIVE ET MÉTHODE DE VISUALISATION D'UN ESPACE SUR BASE DE CES DONNÉES D'IMAGES**
VERFAHREN ZUM SAMMELN VON BILDDATEN ZUR HERSTELLUNG VON IMMERSIVEM VIDEO UND VERFAHREN ZUR BETRACHTUNG EINES RAUMES AUF BASIS DER BILDDATEN
METHOD FOR COLLECTING IMAGE DATA FOR PRODUCING IMMERSIVE VIDEO AND METHOD FOR VIEWING A SPACE ON THE BASIS OF THE IMAGE DATA

(30) Priorité: 22.10.2014 BE 201405025
(43) Date de publication de la demande: 30.08.2017
(73) Titulaire: Parallaxter, 1081 Koekelberg (BE)
(72) Inventeur: SALOME, Tristan, B-1050 Bruxelles (BE); DE CONINCK, Michael, B-1050 Bruxelles (BE); MASCARELLO, Chris, B-1030 Bruxelles (BE); VANDERHAEGEN, James, B-1020 Brussel (BE); HONOREZ, Gael, B-1040 Bruxelles (BE)
(74) Mandataire: Quintelier, Claude
(86) Numéro de dépôt international: PCT/BE2015/000056
(87) Numéro de publication internationale: WO 2016/061640

(56) Documents cités:
- WO-A1-2013/086739
- US-A1- 2008 316 301
- US-A1- 2013 002 827
- US-A1- 2014 098 186

## Description

La présente invention concerne une méthode pour collecter des données d'images destinées à produire une vidéo immersive, laquelle méthode comprend la mise en place d'un premier ensemble d'au moins n scanneurs (n>1), chacun agencés pour produire des rayons de balayage, laquelle méthode comprend également le balayage par chacun des scanneurs dudit premier ensemble de scanneurs à l'aide des rayons de balayage d'un espace prédéterminé pour produire les données d'images dudit espace, lesquelles données d'images sont stockées dans une mémoire. Elle concerne également une méthode de visualisation de ces données d'image.

Une telle méthode est connue de la demande de brevet US 2013/0083173. Une telle méthode est également utilisée dans des jeux vidéo pour créer des décors. Pour permettre de visualiser des images produites dans une vidéo immersive il faut d'abord collecter ces données d'images. Cela se fait à l'aide d'un ensemble de scanneurs qui balayent un espace prédéterminé qui constitue la scène dans laquelle la vidéo immersive se joue. Les données d'image ainsi collectées sont stockées dans la mémoire. La demande US2008/0316301 décrit aussi une telle méthode.

Lorsque l'utilisateur d'un jeu vidéo veut se déplacer dans la scène tridimensionnelle du jeu vidéo il va généralement utiliser un clavier et une souris de l'ordinateur qui exécute le jeu vidéo. Le jeu vidéo calcule alors en temps réel le rendu de la scène 3D à partir du nouveau point de vue du personnage virtuel et ce rendu est affiché sur l'écran de l'ordinateur. Ceci permet à l'utilisateur de se déplacer dans le monde virtuel du jeu vidéo et d'interagir avec ce monde.

Ces interactions simples permettent déjà à certains utilisateurs au bout de quelques minutes de jeu, de se sentir dans la peau du personnage virtuel du jeu vidéo. La sensation d'immersion virtuelle consiste à donner l'impression à l'utilisateur d'être physiquement réellement dans la scène 3D virtuelle. Cette sensation peut être plus ou moins forte en fonction de l'adéquation entre ce qui est perçu par les sens de l'utilisateur et ce qui serait perçu si l'utilisateur était réellement dans l'équivalent physique de la scène 3D virtuelle, c'est à dire dans le monde réel. On appelle communément des systèmes de réalité virtuelle des systèmes qui présentent aux yeux de l'utilisateur des images qui sont cohérentes avec les mouvements de rotation de sa tête.

La technique la plus communément utilisée pour obtenir un système de réalité virtuelle est un casque de réalité virtuelle. L'utilisateur porte le casque sur la tête, et le casque est relié à l'ordinateur. Le casque par l'intermédiaire d'écrans et de jeux de lentilles placés devant les yeux de l'utilisateur présente à chaque œil des images de synthèse calculées en temps réel par l'ordinateur. Le casque comporte également un capteur permettant de mesurer l'orientation de la tête de l'utilisateur. Le principe est le suivant : l'utilisateur tourne la tête, le casque de réalité virtuelle perçoit ce mouvement de tête et envoie l'information sur la nouvelle orientation de la tête de l'utilisateur à l'ordinateur, l'ordinateur fait un rendu stéréoscopique de la scène 3D virtuelle avec une orientation des deux caméras virtuelles correspondant à la nouvelle orientation des yeux de l'utilisateur, les images rendues en temps réel par l'ordinateur sont affichées devant les yeux de l'utilisateur.

Différents facteurs vont influencer la qualité de l'expérience d'immersion au niveau visuel. Le principal facteur est l'adéquation entre le mouvement de tête de l'utilisateur, qui est mesuré par son oreille interne, et sa vision. L'être humain est habitué dans le monde réel à une adéquation parfaite entre ces deux sens. Selon le degré d'incohérence entre les images vues par les yeux et les mouvements ressentis par l'oreille interne de l'utilisateur, celui-ci va ressentir une légère sensation de gêne, une fatigue visuelle, des migraines, une sensation de malaise et de retournement d'estomac pouvant aller jusqu'au vomissement. Ces effets sont appelés le mal de la réalité virtuelle ou «Cyber-Sickness» et s'apparentent au mal de mer.

Les vidéos immersives connues sont des films monoscopiques ou stéréoscopiques préenregistrés ou pré-calculés qui couvrent un champ de vision de 360 degrés autour de l'utilisateur. Ces vidéos immersives connues peuvent être visualisées grâce à un casque de réalité virtuelle. Le casque de réalité virtuelle mesure l'orientation de la tête de l'utilisateur et permet à l'ordinateur de renvoyer sur l'affichage du casque les images pour l'œil de droite et pour l'œil de gauche correspondant à cette orientation.

Pour les vidéos immersives connues, comme dans le cas des vidéos normales, les images sont préenregistrées ou pré-calculées, elles ne sont donc pas calculées en temps réel. Donc au lieu de 1/60 de seconde par exemple pour le calcul d'une image en temps réel, elle a pu être calculée en plus d'une heure. Ceci permet d'avoir une qualité d'image bien supérieure à celle de la réalité virtuelle.

Lorsque l'utilisateur effectue avec sa tête un mouvement de translation son champ de vision va se déplacer. Lors d'un tel déplacement les images des objets qui sont proches de l'utilisateur se déplacent plus vite que les images des objets qui sont lointains. On perçoit nettement cet effet lorsqu'on se trouve dans un train en mouvement et que l'on regarde par la fenêtre, on voit les barrières proches défiler très vite, alors que la montagne lointaine apparaît quasiment fixe. Cet effet est appelé parallaxe.

Un problème des vidéos immersives connues est qu'elles ne tiennent pas compte des mouvements de translation de tête de l'utilisateur et donc ne peuvent pas donner de parallaxe interactive. Cette limitation restreint fortement la qualité d'immersion des vidéos immersives connues. En effet, le cerveau de l'utilisateur s'attend à percevoir de la parallaxe lorsqu'il bouge sa tête, mais n'en perçoit pas. Ce manque diminue le confort de vision de l'utilisateur ainsi que la sensation d'immersion et augmente fortement les risques de «Cyber-Sickness».

L'invention a pour but de réaliser une méthode pour collecter des données d'images destinées à produire une vidéo immersive qui permet de tenir compte de ces mouvements, en particulier des mouvements de translation, de tête de l'utilisateur.

A cette fin une méthode pour collecter des données d'images destinées à produire une vidéo immersive est caractérisée en ce qu'une zone de points de vue est déterminée en délimitant un volume à partir duquel un utilisateur de la vidéo immersive sera en mesure de voir ledit espace et d'effectuer avec sa tête un mouvement, en particulier des mouvement de de translation, à l'intérieur de la zone de points de vue, ladite zone de points de vue avant une taille qui correspond à une latitude de mouvement de tête que l'utilisateur a naturellement autour d'une position de repos, -un deuxième ensemble de m (m>1) points source situés à des extrémités de la zone de points de vue étant ensuite déterminé, laquelle mise en place dudit premier ensemble d'au moins n scanneurs est réalisée en plaçant à chacun desdits points source chaque fois un desdits scanneurs du premier ensemble, ledit balayage dudit espace étant réalisé à l'aide desdits scanneurs placés sur les points source et en balayant pas à pas ledit espace suivant une succession d'une part d'angles d'azimut et d'autre part d'angles d'élévation situés chacun dans une plage prédéterminée par la zone de point de vue, laquelle production des données d'image est réalisée en collectant pour chaque rayon de balayage produit le rayon de balayage réfléchit par chaque fois un point touché situé dans ledit espace et touché par le rayon de balayage concerné et en déterminant lors de chaque pas et sur base du rayon de balayage réfléchit une distance entre le point touché et le scanneur ayant produit le rayon de balayage concerné ainsi qu'un paramètre de couleur dudit point touché, lesdites données étant stockées dans la mémoire sous forme d'une matrice structurée selon les angles d'azimut et d'élévation.

En déterminant une zone de points de vue qui délimite un volume à partir duquel un utilisateur de la vidéo immersive sera en mesure de voir ledit espace et d'effectuer un mouvement avec sa tête à l'intérieur de la zone de points de vue, il devient possible de déterminer des points sources où des scanneurs seront disposés et ainsi de scanner l'espace à partir de ces points sources. Ceci permet alors de collecter des données d'images à partir de cette zone de points de vue et ainsi de prendre en compte les mouvements, en particulier des mouvements de translation, de la tête de l'utilisateur et de donner du point de vue de la vision dans le casque un effet de parallaxe interactive. On parle de parallaxe interactive par opposition à une parallaxe que l'on pourrait qualifier de passive, qui serait lié au déplacement dans une vidéo immersive du point de vue prévu par le réalisateur de la vidéo immersive.

Les systèmes de réalité virtuelle permettent d'avoir cette parallaxe interactive, mais ils doivent pour cela calculer en temps réel les images présentées aux yeux de l'utilisateur. Ce calcul en temps réel diminue fortement la qualité de l'image.

La méthode pour créer des vidéos immersives avec parallaxe interactive selon l'invention utilise des images de synthèses pré calculées ou des tournages réels, assurant donc une meilleure qualité d'image comparée au temps réel de la réalité virtuelle. L'inclusion de la parallaxe interactive dans les vidéos immersives permet que l'utilisateur ressente une très bonne sensation d'immersion, et diminue très fortement le risque cyber-sickness.

La zone de point de vue permet de limiter la quantité d'information qui doit être stockée afin de reproduire l'espace scanné. Cette limitation d'information permet d'avoir une quantité d'information et de données, gérable. La configuration, taille et forme, de la zone de point de vue prédétermine le nombre et la disposition des scanneurs qui sont utilisés pour balayer l'espace.

Une première forme de réalisation préférentielle de la méthode suivant l'invention est caractérisée en ce que la zone de points de vue est formée par un volume essentiellement rectangulaire, en particulier un parallélépipède rectangle ayant une hauteur d'au moins 30 cm, une profondeur d'au moins 30 cm et une largeur d'au moins 30 cm. Cela permet de couvrir les positions atteignables lors des mouvements de translation et/ou de rotation de la tête d'un utilisateur, lorsque celui-ci maintient le reste de son corps dans une position fixe.

Une deuxième forme de réalisation préférentielle de la méthode suivant l'invention est caractérisée en ce que les données stockées sont filtrées en déterminant pour chaque point touché par un scanneur si ce point est atteignable par un rayon lancé par au moins un autre desdits n scanneurs, et au cas où le point touché considéré est atteignable par un rayon lancé par au moins un autre desdits n scanneurs on détermine sur base d'un critère de sélection prédéterminé si les données stockées du point touché considéré doivent être éliminées des données stockées. Cette étape de filtrage permet de filtrer et de conserver seulement les points qui donnent de l'information utile. Ceci permet de diminuer la quantité d'information stockée pour produire la vidéo immersive avec parallaxe interactive.

Une troisième forme de réalisation préférentielle de la méthode suivant l'invention est caractérisée en ce que ledit critère de sélection est basé sur l'aire de la surface scannée entre deux pas successifs de balayage suivant l'angle d'azimut et deux pas successifs de balayage suivant l'angle d'élévation par le scanneur ayant produit le point touché considéré et le ou les scanners parmi les n autres scanners pouvant atteindre le point touché considéré.

De préférence, la méthode suivant l'invention est caractérisée en ce que l'on utilise des scanneurs qui sont soit des scanneurs virtuels, soit de scanneurs physiques. La scène peut ainsi être reproduite par l'intermédiaire des scanneurs virtuels ou physiques, ces derniers sont utilisés de la même façon qu'un réalisateur filme avec sa caméra les scènes de son film.

Suivant une forme avantageuse de la méthode suivant l'invention la zone de points de vue est déplacée dans ledit espace à partir d'une première position vers une deuxième position située à une distance prédéterminée de cette première position, le balayage par chacun des scanneurs dudit premier ensemble de scanneurs et la production et le stockage des données d'images dudit espace étant répété pour la deuxième position de la zone de points de vue après celui effectué pour la première position. On peut ainsi se représenter le système comme recréant autour de l'utilisateur au moment de la visualisation une scène virtuelle 3D pour chaque fraction de temps de la vidéo immersive. Chacune de ces scènes 3D virtuelles éphémères se limite à ce que l'utilisateur peut voir depuis sa zone de points de vue. L'évolution de l'aspect de ces scènes correspond aux mouvements des objets et/ou personnages dans la vidéo et au déplacement de la position de la zone de points de vue contrôlée par le réalisateur du film. Donc, contrairement à la réalité virtuelle ou, au moment du rendu en temps réel, une caméra est déplacée dans une scène 3D lorsqu'il y a déplacement de l'utilisateur. Dans l'invention c'est la scène 3D qui bouge autour de l'utilisateur lorsque la zone de points de vue a été déplacée lors de la création du film immersif avec parallaxe interactive.

La méthode de visualisation de vidéos immersives avec parallaxe interactive suivant l'invention comprend:
- une détermination dans la zone de points de vue ayant une taille qui correspond à une une latitude de mouvement de tête que l'utilisateur a naturellement autour d'une position de repos d'une position et d'une orientation des yeux de l'utilisateur par des capteurs et l'utilisation d'algorithmes de prédiction de mouvements de tête de l'utilisateur pour déterminer ce qui sera visible par l'utilisateur ;
- une sélection sur base de la position et l'orientation des yeux de l'utilisateur des données d'images parmi les données d'images stockées nécessaires à la visualisation de la partie de l'espace scanné visible par l'utilisateur;
- un chargement dans une mémoire temporaire des données d'images sélectionnées;
- une production de deux images sur base des données d'images stockée dans la mémoire temporaire; et
- une présentation des deux images produites aux yeux de l'utilisateur.

Ceci permet de présenter à l'utilisateur une densité de points chargés à partir des données d'images qui est cohérente avec la définition de l'affichage du casque de réalité virtuelle.

De préférence la méthode de visualisation suivant l'invention est caractérisée en ce que la présentation des deux images à l'utilisateur est réalisée par l'intermédiaire d'un casque de réalité virtuelle.

Avantageusement la méthode de visualisation suivant l'invention est caractérisée en ce qu'elle est utilisée dans un dispositif dans lequel un mouvement est conféré à l'utilisateur, les coordonnées desdits mouvements conférés étant envoyées à un système de visualisation qui applique ladite méthode de visualisation pour synchroniser le déroulement des images avec lesdits mouvements. Ceci permet de coupler à la visualisation selon l'invention des mouvements conférés à l'utilisateur.

La vidéo immersive peut ainsi être appliquée au «ride» des parcs d'attractions. Le principe du ride est d'être emmené, généralement dans un siège à travers différents décors. C'est comparable aux montagnes russes, mais l'accent est plus porté sur une visite de décors que dans les sensations d'accélération.

L'invention sera maintenant décrite plus en détail à l'aide des dessins qui illustrent une forme de réalisation préférée de la méthode suivant l'invention. Dans les dessins :
la figure 1 illustre un volume représentant une zone de points de vue dans laquelle un utilisateur peut bouger sa tête ;
la figure 2a illustre une scène et la figure 2b la partie visible de la scène balayée par rapport à la zone de points de vue ;
la figure 3 illustre un concept de précision de l'espace balayé par rapport à la zone de points de vue ;
les figures 4a et 4b illustrent la position du premier ensemble d'au moins n scanneurs dans la zone de points de vue prédéfinie ;
les figures 5a et 5b illustrent des points touchés dans l'espace balayé par chaque fois un rayon de balayage émis par un scanneur ;
la figure 6 illustre le concept d'un point dans l'espace atteignable par deux scanneurs différents ;
la figure 7 illustre le balayage d'une scène et le filtrage des points touchés ;
les figures 8a et 8b illustrent une méthode de filtrage par surface apparente ;
les figures 9 a à d illustrent la méthode de filtrage qui accorde une priorité aux scanneurs ;
la figure 10 illustre l'échantillonnage à l'aide d'autres rayons de balayage d'un espace ayant des objets situés à des distances différentes par rapport au point central du scanneur;
la figure 11 illustre un concept de rapport entre la distance maximale et minimale des autres points touchés et la perception par l'utilisateur depuis un point de vue décalé par rapport au scanneur ;
la figure 12 illustre qu'une densité de points touchés est cohérente avec la définition angulaire de l'affichage ;
la figure 13 illustre la représentation ecosphérique d'un balayage et du stockage qui s'y rapporte ;
la figure 14 illustre le concept de déplacement de la zone de point de vue ;
la figure 15 illustre le stockage des données d'image dans la mémoire ; et
la figure 16 illustre le concept de modification du rayon réfléchi.

Dans les dessins une même référence a été attribuée à un même élément ou à un élément analogue.

Des programmes informatiques peuvent simuler l'équivalent d'un studio de cinéma complet avec des décors, des lumières et des caméras. On parle alors d'objets tridimensionnels, de lumières et de caméras virtuelles, ces éléments n'existent pas dans le monde physique réel, ils existent seulement comme une représentation simulée dans un ordinateur. Un exemple d'un programme informatique de ce type est le logiciel «Maya» de la société «Autodesk». L'ensemble de ces éléments tridimensionnels virtuels, par exemple formé par des objets, une lumière et une caméra, est appelé la scène 3D virtuelle, ou plus simplement la scène 3D ou espace virtuel 3D.

Une fois que l'espace virtuel 3D est mis en place, l'ordinateur peut calculer l'image correspondant à ce que voit la caméra virtuelle dans l'espace virtuel 3D et cela compte tenu des objets et lumières présentes dans cette espace 3D et de la position de la caméra virtuelle. Ce calcul est appelé rendu de l'espace virtuel 3D et l'image résultante de ce rendu est une image de synthèse.

Les deux yeux d'un utilisateur perçoivent le monde physique réel selon deux points de vue légèrement différents, ils sont écartés en moyenne de 6.5 cm chez l'adulte. Cette distance est appelée distance interoculaire. Ce léger décalage de point de vue sur la même scène réelle, permet au cerveau de l'utilisateur de définir à quelle distance se trouvent les objets qui l'entourent. Un film stéréoscopique consiste à rendre deux images différentes d'une même scène pour chaque œil de l'utilisateur pour reproduire l'effet de relief.

Le logiciel de rendu peut tenir compte des mouvements des objets présents dans l'espace et de la luminosité. Si on demande alors au logiciel de faire des rendus successifs à différents moments dans le temps, les images rendues seront différentes et l'on obtient un film en images de synthèses. Dans le cadre du cinéma traditionnel, une seconde d'une action est décomposée en vingt-quatre images fixes, et donc pour créer un film en images de synthèse pour une diffusion au cinéma, il faudra calculer vingt-quatre images par seconde d'action dans le film.

On parle d'images de synthèse pré-calculées lorsque les différentes images du film sont d'abord rendues et stockées, puis repassées au rythme correspondant au média de diffusion de par exemple vingt-quatre images par secondes pour le cinéma traditionnel. Le calcul de chaque image de synthèse peut prendre beaucoup de temps pour obtenir une bonne qualité d'image. Dans la plupart des cas, le rendu dure plus d'une heure par image. Donc, il est typique qu'un ordinateur calcule pendant une journée entière (vingt-quatre fois une heure) l'équivalent d'une seconde de film (vingt-quatre images par seconde).

Si l'ordinateur est capable de faire le rendu de chaque image au même rythme que les images sont diffusées, on dit alors que le rendu est effectué en temps réel. Toujours dans l'exemple du cinéma à vingt-quatre images par secondes, pour que le film soit rendu en temps réel, cela implique que chaque image soit calculée en 1/24^{ième} de seconde au maximum.

La sensation d'immersion virtuelle consiste à donner l'impression à l'utilisateur d'être physiquement réellement dans l'espace virtuel 3D. Cette sensation peut être plus ou moins forte en fonction de l'adéquation entre ce qui est perçu par les sens de l'utilisateur et ce qui serait perçu si l'utilisateur était réellement dans l'équivalent physique de l'espace virtuel 3D.

On appelle communément des systèmes de réalité virtuelle des systèmes qui présentent aux yeux de l'utilisateur des images qui sont cohérentes avec les mouvements de rotation de la tête de l'utilisateur.

La technique la plus communément utilisée pour obtenir un système de réalité virtuelle est un casque de réalité virtuelle. L'utilisateur porte le casque sur la tête et le casque est relié à un ordinateur. Le casque présente, par l'intermédiaire d'écrans et de jeux de lentilles placés devant les yeux de l'utilisateur, à chaque œil des images de synthèse calculées en temps réel par l'ordinateur. Le casque comporte également un capteur permettant de mesurer l'orientation de la tête de l'utilisateur. On utilise également des algorithmes qui permettent de prédire des mouvements de la tête de l'utilisateur.

Le principe est le suivant, lorsque l'utilisateur tourne la tête, le casque de réalité virtuelle perçoit ce mouvement de tête et envoie l'information sur la nouvelle orientation de la tête de l'utilisateur à l'ordinateur. L'ordinateur fait un rendu stéréoscopique de la scène 3D virtuelle avec une orientation des deux caméras virtuelles correspondant à la nouvelle orientation de la tête de l'utilisateur. Les images rendues en temps réel par l'ordinateur sont affichées devant les yeux de l'utilisateur.

A noter que les casques modernes de réalité virtuelle, comme ceux construits par la société «Oculus», permettent de prendre en compte non seulement l'orientation de la tête de l'utilisateur, mais également sa position.

Différents facteurs vont influencer la qualité de l'expérience d'immersion au niveau visuel. Le principal facteur est l'adéquation entre le mouvement de tête de l'utilisateur mesurée par son oreille interne et sa vision. Dans la réalité l'utilisateur est habitué à une adéquation parfaite entre ces deux sens. Selon le degré d'incohérence entre les images vues par les yeux et les mouvements ressentis par l'oreille interne de l'utilisateur, celui-ci va ressentir une légère sensation de gêne, une fatigue visuelle, des migraines, une sensation de malaise et de retournement d'estomac pouvant aller jusqu'au vomissement. Ces effets sont appelés le «mal de la réalité virtuelle» ou «Cyber-Sickness» et s'apparentent au mal de mer.

Lors de l'enregistrement d'une scène qui se déroule dans un espace, une caméra classique enregistre l'action se déroulant droit devant elle et sur les côtés jusqu'à la limite de son champ de vision. Ce champ de vision est exprimé en degrés et donne l'angle de vision total couvert par la caméra.

Dans le cas particulier d'une vidéo sphérique, le champ de vision de la caméra est de 360° horizontal et de 180° vertical, le champ de vision est donc total car la caméra voit dans toutes les directions.

Une vidéo sphérique stéréoscopique allie les caractéristiques de la vidéo sphérique et de la vidéo stéréoscopique. Il s'agit donc d'un couple de vidéo, une destinée à l'œil de droite et l'autre à l'œil de gauche. Chacune de ces deux vidéos couvre le champ de vision complet sphérique.

En couplant un casque de réalité virtuelle avec une vidéo sphérique stéréoscopique, on obtient un système de vidéo immersive connu .Le casque de réalité virtuelle mesure l'orientation de la tête de l'utilisateur et la transmet à l'ordinateur. L'ordinateur extrait sur chacune des deux vidéos sphériques stéréoscopiques la partie de la vidéo qui correspond au champ de vision de la nouvelle orientation de la tête de l'utilisateur. Ces deux morceaux de vidéo sont affichés devant les yeux de l'utilisateur.

Ces vidéos immersives connues présentent certaines caractéristiques d'immersion, par exemple une certaine adéquation entre les mouvements de rotation de la tête perçus par l'oreille interne et les images arrivants aux yeux de l'utilisateur, et une certaine perception du relief des scènes présentées à l'utilisateur. Mais ces vidéo immersives connues sont prisent depuis un point de vue unique, elles ne permettent donc pas de tenir compte des mouvements de translation de la tête de l'utilisateur, ce qui diminue fortement la sensation d'immersion et surtout augmente fortement les chances de "cyber-sickness".

Précédemment à l'invention, les deux méthodes permettant d'obtenir une sensation d'immersion dans une vidéo étaient d'une part la réalité virtuelle, qui peut tenir compte des mouvements, notamment de translation, de la tête de l'utilisateur, et donc procurer une bonne sensation d'immersion, mais qui implique de calculer les images en temps réel ce qui réduit fortement la qualité des images, et d'autre part les vidéos immersives connues, qui ne donnent pas des bonnes sensations d'immersion et induisent un risque élevé de "cyber-sickness".

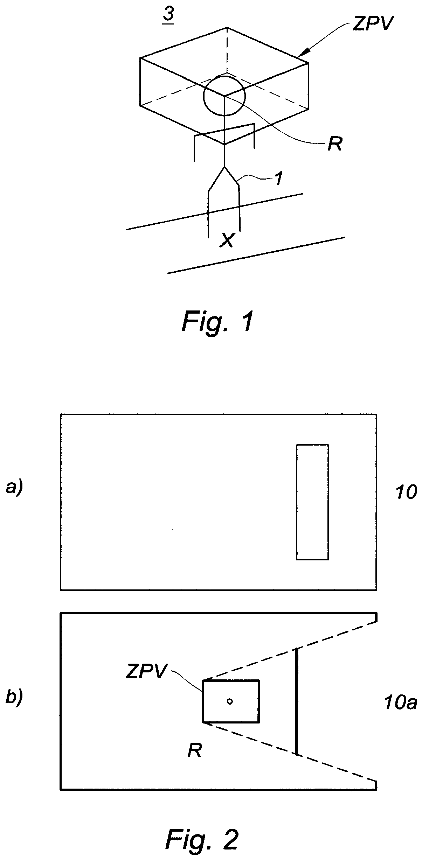

L'invention permet de prendre en compte le déplacement de la tête de l'utilisateur 1 dans un volume restreint qui est appelé zone de points de vue (ZPV) et qui est illustrée à la figure 1. La zone de points de vue ZPV est déterminée en délimitant un volume à partir duquel un utilisateur 1 de la vidéo immersive sera en mesure de voir l'espace 3 dans lequel la scène se déroule et d'effectuer avec sa tête un mouvement de translation et d'inclinaison à l'intérieur de cette zone de points de vue. En pratique la taille de la zone de points de vue ZPV correspond de préférence à la latitude de mouvement de tête que l'utilisateur 1 a naturellement autour de sa position au repos, alors que l'utilisateur ne déplace pas le reste de son corps. Cette position au repos correspond de préférence à la position de la tête de l'utilisateur 1 quand il se tient droit et relax, sans se pencher ni se soulever ou s'abaisser. La latitude de mouvement correspond aux positions qui sont normalement atteignables par la tête de l'utilisateur 1 sans faire de pas, dans le cas de la position debout, et sans se relever, ni déplacer son siège, dans le cas de la position assise. La taille exacte de la zone de points de vue ZPV et sa forme géométrique, peuvent changer en fonction de la position prévue pour l'utilisateur 1. Il peut être soit assis, soit couché, soit debout.

La zone de points de vue est par exemple formée par un volume essentiellement rectangulaire, en particulier un parallélépipède rectangle, ayant une hauteur d'au moins 30 cm, en particulier de 50 cm, une profondeur d'au moins 30 cm, en particulier de 1m, et une largeur d'au moins 30 cm, en particulier de 1m. Une telle dimension de la zone de points de vue est suffisante pour délimiter les positions potentielles de la tête, et donc des yeux, de l'utilisateur 1. Le point R est le point central de la zone de point de vue ZPV, c'est-à-dire le point localisé entre les yeux de l'utilisateur 1 lorsqu'il est en position de repos. Suivant une autre forme de réalisation la zone de points de vue est formée par un volume essentiellement en configuration d'octaèdre.

En balayant l'espace à partir de la zone de points de vue ZPV en forme de parallélépipède qui mesure par exemple 105 cm de profondeur et 45 cm de haut, avec une plage de 15 cm couverte par scanneur, on utilisera un total de 8 x 8 x 4 = 256 scanneurs.

Il faut veiller à que la zone de point de vue ZPV présente une taille suffisante mais par trop grande. Une taille de zone de points de vue infinie correspondrait à être en mode de réalité virtuelle standard. Cette zone de point de vue ZPV permet donc de limiter le nombre de données d'images qui seront stockés afin de limiter la capacité de stockage et les rendre gérables en comparaison à des systèmes en réalité virtuelle qui ont besoin de stocker d'énormes quantité d'information pour obtenir un niveau de détail équivalent à celui obtenu par la méthode suivant l' invention.

La figure 2 illustre une comparaison entre l'information présente lors d'une scène 10 de réalité virtuelle et d'une scène 10A d'une vidéo immersive avec parallaxe selon l'invention. La scène 10 en réalité virtuelle dans laquelle l'utilisateur 1 peut se trouver, est complète. C'est à dire que, lorsque l'utilisateur se déplace dans cette scène 10, l'ensemble des objets de la scène virtuelle sont chargés dans la scène 10. Tandis qu'en suivant l'invention, seuls les éléments qui sont potentiellement visibles depuis la zone de points de vue ZPV sont chargés à un moment donné. A la figure 2b les lignes plus épaisses de la scène de 10A montrent la partie des éléments de la scène qui sont potentiellement visibles depuis la zone de points de vue ZPV. Donc, seulement le côté gauche de la forme rectangulaire est visible, tandis que le côté droit du contour de la scène 10a est invisible depuis la zone de point de vue ZPV prédéterminée. Ceci permet de réduire le nombre points touchés par les rayons des scanneurs et permet ainsi de réduire le besoin de capacité de mémoire afin d'enregistrer l'information des points touchés.

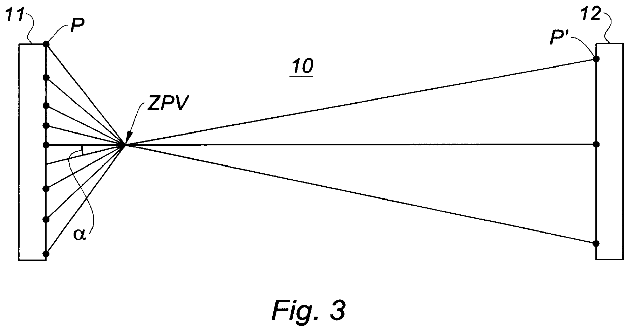

La figure 3 illustre le concept de précision des points touchés dans l'espace par un rayon de balayage émis par un scanneur. Toujours dans l'exemple de la scène 10, en réalité virtuelle, la précision de la modélisation des objets virtuels dans la scène virtuelle est homogène. C'est à dire que la précision dans les détails des modèles sera la même pour tous les objets 11 et 12 de la scène virtuelle. Dans le cas de l'invention, les objets proches 11 de la zone de points de vue ZPV présentent beaucoup plus de précision que les objets lointains 12. Ainsi, les points touchés P par un rayon d'un scanneur et qui sont proche de l'objet 11 présentent plus de points touchés résultant du balayage que les points touchés P' de l'objet lointain 12. Suivant l'exemple de la figure 3, les points touchés P de l'objet proche 11 présentent neuf points, tandis que les points touchés P' de l'objet lointain 12 présentent seulement trois points. Ainsi, la précision est variable en fonction de la position de la zone de points de vue ZPV, la précision d'un même objet peut être très grande à un moment dans le film immersif et très faible à un autre moment. Comme dans la nature, les objets qui sont proches de la zone de point de vue ZPV présentent une bonne résolution et les objets lointains une moins bonne résolution, tout dépend donc de la distance entre l'objet et la zone de point de vue ZPV.

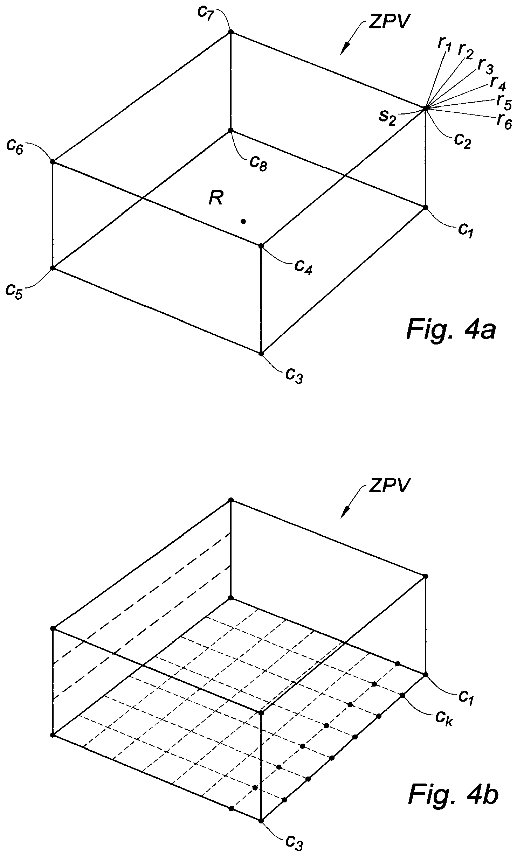

Comme illustré à la figure 4a, pour collecter des données d'images destinées à produire la vidéo immersive, la méthode selon l'invention comprend la mise en place d'un premier ensemble d'au moins n scanneurs s₁, s₂, .....sₙ (n>1), chacun agencés pour produire des rayons de balayage r₁,...., rⱼ₋₁, rⱼ (j≥J). Le nombre J minimal de rayons de balayage est déterminé en fonction de la résolution de l'écran d'affichage prévu pour la visualisation. De préférence le pas de balayage, c'est-à-dire l'angle entre deux rayons subséquent (rⱼ - rⱼ₊₁), est inférieur ou égale à la résolution angulaire de l'écran d'affichage. Pour des raisons de clarté seule pour un des scanneurs les rayons de balayage ont été repris dans le dessin. Chacun des scanneurs sᵢ (1≤i≤n) du premier ensemble sert à balayer, à l'aide des rayons de balayage, l'espace 3 pour produire les données d'images de cet espace, lesquelles données d'images sont ensuite stockées dans une mémoire.

Pour mettre en place les scanneurs du premier ensemble d'au moins n scanneurs, un deuxième ensemble de m (m>1) points source C1, C2,..., C7 et C8 situés à des extrémités de la zone de points de vue ZPV est déterminé. Le nombre de huit points de sources repris à la figure 4a est lié à la forme rectangulaire de la zone de points de vue et n'est donné qu'à titre d'exemple et ne limite en aucune façon la portée de l'invention. La mise en place des au moins n scanneurs est réalisée en plaçant à chacun des points source chaque fois un desdits scanneurs du premier ensemble.

Pour pouvoir balayer l'espace avec une définition suffisante les scanneurs sont placés à des extrémités de la zone de points de vue. Bien entendu il est possible de déterminer des points sources supplémentaire dans la zone de points de vue. La figure 4b illustre une configuration où la zone de point de vue est pourvue d'une grille. Cette grille est de préférence appliquée sur chacune de ces faces. Les différents points de cette grille peuvent former des points sources Cₖ destinés à y disposer un scanneur. Il est également possible d'avoir des points sources à l'intérieur de la zone de points de vue. Le nombre de points sources utilisés aux points extrêmes de la zone de points de vue est prépondérant. Le placement de points source supplémentaires à la surface de la zone de points de vue peut améliorer la qualité des sensations lors de la visualisation. Par contre l'ajout de points source supplémentaire à l'intérieur de la zone de point de vue, n'a pas beaucoup d'intérêt.

Le terme scanneur est utilisé dans la description de l'invention pour un ensemble de scanneurs 3D virtuels ou physiques, lesquelles réalisent de préférence un balayage ou un scanning dans toutes les directions, à 360 degrés.

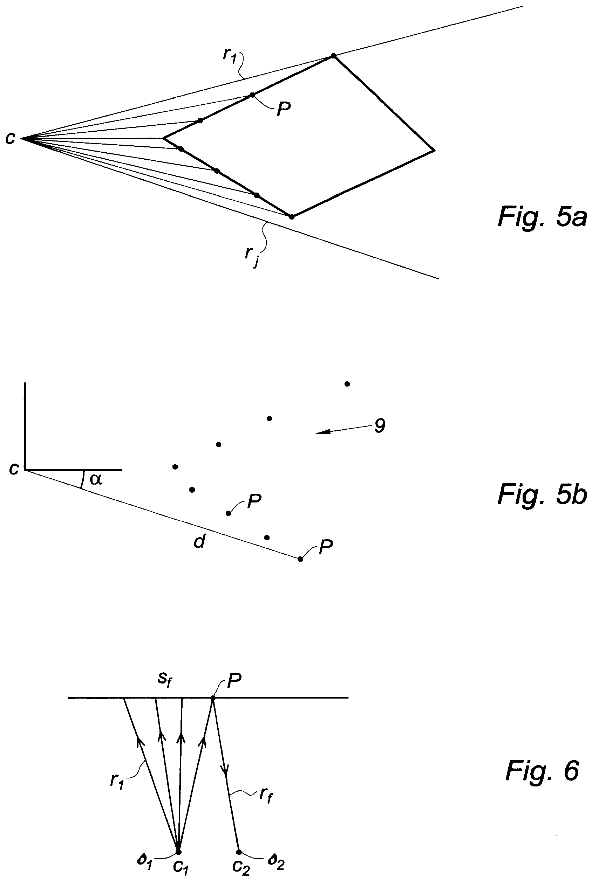

Le balayage de l'espace est réalisé à l'aide des scanneurs sᵢ placés sur les points source C en balayant pas à pas ledit espace suivant une succession d'une part d'angles d'azimut et d'autre part d'angles d'élévation situés chacun dans une plage prédéterminée par la zone de point de vue. De préférence les pas du balayage ont une valeur d'angle situé entre 0,01° et 1°, plus particulièrement entre 0.025° et 0.1°. La production des données d'images est réalisée en collectant pour chaque rayon de balayage rₗ (1≤j≤J) produit, le rayon de balayage réfléchit par chaque fois un point touché P (voir figures 5 a et b), situé dans ledit espace 3 et touché par le rayon de balayage ri concerné. On détermine également lors de chaque pas et sur base du rayon de balayage réfléchit une distance (d) entre le point touché P et le scanneur s ayant produit le rayon de balayage rₗ concerné, ainsi qu'un paramètre de couleur dudit point touché. Pour chaque point touché P on obtient ainsi la distance d entre ce point P et un point, par exemple le point central, du scanneur concerné. Comme la direction de chaque rayon de balayage est connue et que la distance d du point P est calculée, la position tridimensionnelle du point P dans l'espace balayé peut être reconstituée.

La couleur du point touché P est par exemple calculée de façon habituelle pour les images de synthèse comme si le rayon de balayage était un rayon de vision d'une caméra virtuelle. L'ordinateur tient donc compte pour calculer la couleur du point P touché de la texture et de l'apparence de l'objet touché, des lumières virtuelles dans l'espace 3 et de leurs rebonds ainsi que de la position de la caméra sphérique virtuelle.

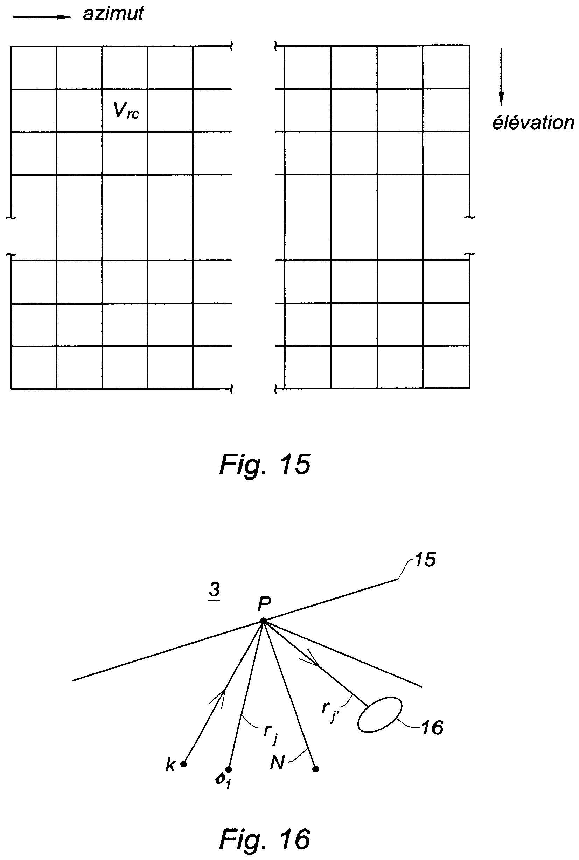

Après avoir déterminé la distance d du point P et sa couleur, ses valeurs sont stockées dans la mémoire en tant que données d'images. Le stockage se fait de préférence sous forme d'une matrice structurée selon les angles d'azimut et d'élévation. Chaque élément de la matrice correspond à l'angle du rayon de balayage. Ceci est illustré à la figure 15 où les lignes de la matrice reprennent chaque fois un pas de balayage suivant l'angle d'élévation et les colonnes de la matrice reprennent chaque fois un pas de balayage suivant l'angle d'azimut. Une valeur V_{rc} stockée à la ligne r et la colonne c reprend donc la distance d et la couleur obtenue par le rayon de balayage ayant un angle d'élévation égal à la valeur du pas de balayage suivant l'angle d'élévation multipliée par la valeur du nombre t de la ligne et par le rayon de balayage ayant un angle d'azimut égal à la valeur du pas de balayage suivant l'angle d'azimut multipliée par la valeur du nombre c.

Le cas échéant, on peut également stocker dans la mémoire le vecteur de normale de la surface touchée.

Cette structure de la matrice permet de stocker les données de la même façon que celle suivant laquelle le balayage a eu lieu et donc de faciliter la façon de les adresser.

Le fait d'utiliser un deuxième ensemble de points source et au moins n scanneurs aura pour conséquence qu'un même point de l'espace sera atteignable par plus d'un scanneur.

Dans la méthode selon l'invention, on garde dans la mémoire de préférence seulement l'information des points touchés qui sont utile pour représenter la scène à partir de la zone de point de vue ZPV. A cette fin on détermine pour chaque point touché par un scanneur si ce point est atteignable par un rayon lancé par au moins un autre desdits n scanneurs. Ce concept est illustré à la figure 6 qui montre deux scanneurs s₁ et s₂ placés respectivement sur des points sources C₁ et C₂. Les rayons r de balayage du scanneur s₁ peuvent atteindre le point P. On considère maintenant le point P comme étant un point source dans lequel on place un scanneur fictif s_{f} et on vérifie si un rayon rf de ce scanneur fictif s_{f} peut atteindre le point source C₂ où est placé le scanneur s₂. Si tel est le cas l'on considère le point P comme étant atteignable par le scanneur s₂. Au cas où le point touché considéré est atteignable par un rayon lancé par au moins un autre desdits n scanneurs on détermine sur base d'un critère de sélection prédéterminé si les données stockées du point touché considéré doivent être éliminées des données stockées. Le but de ce filtrage est donc d'éviter que des données redondantes d'images soient stockées dans la mémoire.

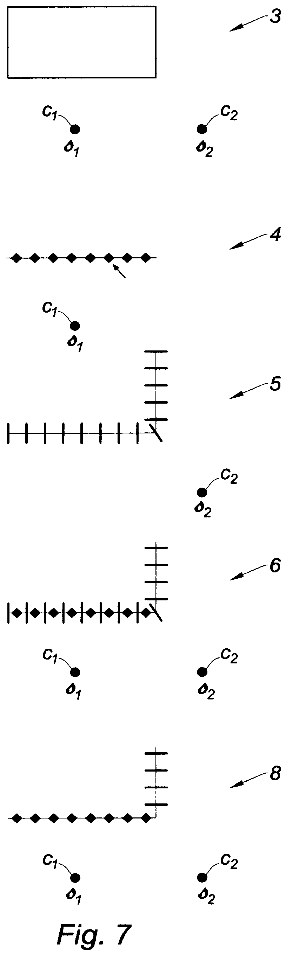

La figure 7 illustre le balayage d'une scène par rapport à deux scanneurs s₁ et s₂ placés respectivement dans des points sources C₁ et C₂. On obtient un premier jeu 4 de points touchés lorsqu'on balaye l'espace 3 avec le scanneur s₁. On obtient un deuxième jeu 5 de points touchés lorsqu'on balaye l'espace 3 avec le scanneur s₂. Les premier et deuxième jeux de points touchés 4, 5 sont différents. Le scanneur s₁ peut seulement atteindre la partie horizontale de la scène en forme de rectangle, tandis que le scanneur s₂ peut atteindre la même zone horizontale que le scanneur s₁ et aussi le côté vertical de la scène à droite sur la figure.
Après l'obtention des premier et deuxième jeux de points touchés 4, 5, il faut ensuite procéder à un filtrage de ces différents points touchés. Les points touchés repris sous 6 à la figure 7 illustrent le mélange des points touchés 4 et 5 par le scanneur s₁ et par le scanneur s₂. On voit donc que dans les points 6 les points de la partie horizontale sont en doubles et qu'un filtrage peut être opéré. Ce filtrage va alors constituer à éliminer les points touchés de la partie horizontale obtenu par le scanneur s₂. Seuls les points repris sous 8 seront alors maintenus dans la mémoire.

Pour procéder au filtrage le critère de sélection est de préférence basé sur l'aire de la surface scannée entre deux pas successifs de balayage suivant l'angle d'azimut et deux pas successifs de balayage suivant l'angle d'élévation par le scanneur ayant produit le point touché considéré et le ou les scanners parmi les n autres scanners pouvant atteindre le point touché considéré.

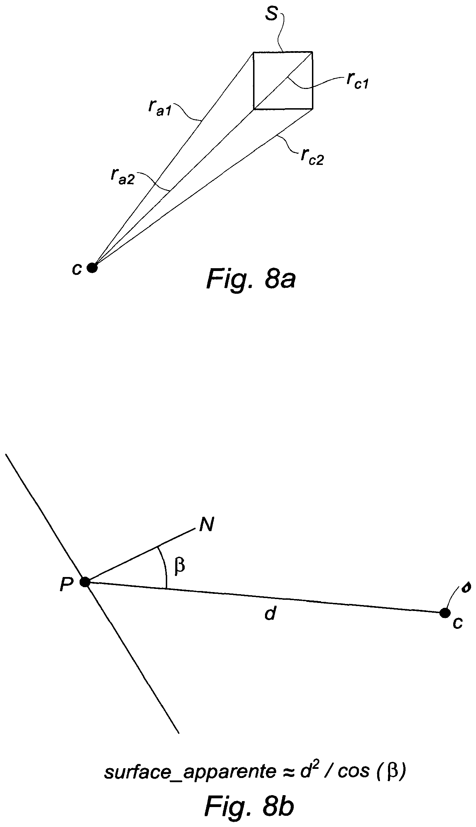

Ce concept de surface scanné est illustré à la figure 8a. Dans cette figure les rayons rₐ₁ et rₐ₂, respectivement rₑ₁ et rₑ₂ représentent des rayons successifs de balayage suivant l'angle d'azimut respectivement d'élévation.

La surface est délimitée d'une part par les points touchés par les rayons rₐ₁ et rₐ₂, et d'autre part les points touchés par les rayons rₑ₁ et rₑ₂ et forme la surface scannée entre deux pas successifs de balayage. Lorsque cette surface scannée est déterminée il devient possible de vérifier si un ou plusieurs autres des n scanneurs du premier ensemble de scanneurs peuvent également atteindre cette surface scannée. Lorsque ce ou ces autres scanneurs ont été identifiés il devient possible de choisir parmi les données obtenues lors du balayage par ces autres scanneurs celle qui seront éliminées.

Suivant une autre forme de réalisation illustrée à la figure 8b, le filtrage est réalisé en ce qu'un angle (β) entre la normale N de la surface scannée et le rayon de balayage ayant produit le point touché P est déterminé. Etant entendu que le pas du balayage a un angle de faible valeur la distance d du point touché P par rapport au scanneur s ne va pas beaucoup varier entre deux rayons de balayage subséquent. On peut donc utiliser cette distance d comme un paramètre pour déterminer l'aire de la surface scannée. Cette aire sera alors proportionnelle au carré de la distance (d) divisé par le cosinus de l'angle β et la valeur de cette aire ainsi obtenue peut former le critère de sélection. Sur base de ce dernier critère de sélection on gardera dans la mémoire que la donnée stockée liée à la valeur ayant la plus petite aire de la surface scannée. L'idée consistant à garder le point touché représentant le plus de détail, donc celui qui représente la plus petite surface scannée.

Notons que cette dernière forme de réalisation est utilisable pour comparer les surfaces apparentes d'un même point entre différents scanners si ceux-ci ont la même définition angulaire.

Le critère de sélection peut également être basé sur la distance entre le point touché et le scanneur ayant produit le point touché et la distance entre le point touché et le ou les scanners parmi les n autres scanners pouvant atteindre le point touché. La donnée stockée conservée étant celle du scanneur ayant mené à la plus petite distance.

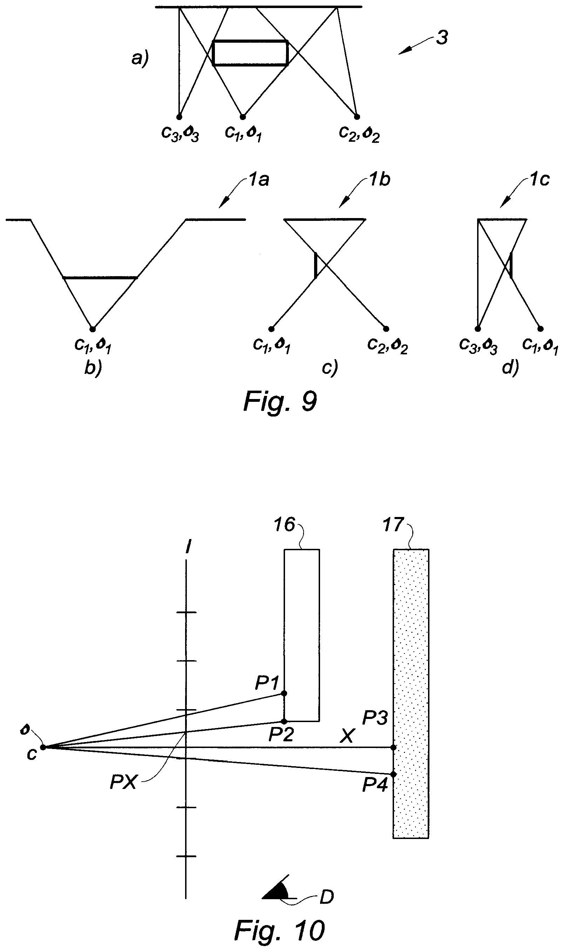

Il est également possible d'attribuer préalablement un ordre de priorité à chacun des n scanneurs placés sur les points source, le critère de sélection étant basé sur cet ordre de priorité. Cette méthode de filtrage est illustrée à la figure 9. On utilise un algorithme pour chaque point scanné afin de vérifier si le point P scanné est visible depuis un scanneur qui a une priorité supérieure. Si tel est le cas, on laisse ce scanneur avec une priorité supérieure enregistrer le point. Si non, c'est le scanneur en cours qui l'enregistre.

A la figure 9a on voit trois scanneurs notés s₁, s₂, et s₃. Pour simplifier la représentation est faite en deux dimensions. L'ordre de priorité des scanneurs est égal à leur numéro. Donc le scanneur s₁ est prioritaire sur le s₂ qui est prioritaire sur le scanneur s₃. La figure 9b montre les surfaces qui sont gardées pour le scanneur s₁. Comme il a priorité sur les autres, il garde toutes les surfaces qu'il peut voir. La figure 9c montre les surfaces qui sont gardées pour le scanneur s₂. Le scanner s₂ voit deux zones qui ne sont pas visibles par le scanner s₁. La figure 9d montre les surfaces qui sont gardées pour le scanneur s₃. Ce sont seulement les surfaces qui vont être gardées par le scanneur s₃, en effet, le reste des surfaces que le scanneur s₃ peut voir sont déjà vues par les scanneurs s₁ ou s₂ qui ont une priorité plus élevée.

Certaines composantes de la couleur apparente d'un point sur un objet dépendent de la position de la camera, laquelle position va influencer l'angle d'incidence du rayon de balayage sur l'objet scanné. Cette composante est appelée en images de synthèse la partie spéculaire du rendu. Pour l'expliquer simplement, cette partie est équivalente à une réflexion du rayon de balayage.

Donc, le même point sur un même objet virtuel avec le même éclairage n'aura pas la même apparence pour deux positions différentes de caméra virtuelle à cause de cette composante de réflexion.

Ce concept est illustré à la figure 16 qui montre un espace 3 qui comporte par exemple une paroi réflective 15 comme un miroir. Un scanneur s₁ est placé devant cette paroi et lance un rayon de balayage rⱼ vers cette paroi. Comme la paroi est réfléchissante le rayon de balayage rⱼ va être réfléchi par cette paroi suivant le même angle que celui où il est incident sur la paroi et cette réflexion va produire un rayon de balayage r_{j'} qui va toucher un objet 16 qui se trouve sur son passage. Cela va causer à son tour une réflexion par cet objet 16 du rayon de balayage r_{j'}. Ce dernier va alors atteindre la paroi 15 d'où il sera réfléchit vers le scanneur s₁. Ce dernier va donc considérer ce dernier rayon réfléchit comme provenant du point P sur la paroi 15 et non comme provenant de l'objet 16. C'est donc la couleur de l'objet 16 qui sera considérée par le scanneur s₁ comme étant celle du point P.

Dans un pareil cas d'objets avec des spéculaires importants ou simplement des matières très réflectives, on risque donc d'avoir des incohérences en mettant côte à côte deux points qui ont été pris depuis deux scanners différents , placés à des positions différentes.

De façon préférentielle, on emploie une technique de rendu pour le calcul des couleurs des points qui « triche » sur le calcul de direction du rayon de balayage.

La méthode employée consiste lors du calcul de la couleur d'un point touché P de donner pour le calcul du rayon réfléchi par la surface 15, non pas la direction réelle du rayon de balayage lancée par le scanneur qui calcule ce point P, mais un rayon dont la direction correspondrait à celle d'un rayon lancé à partir d'un point source K, préférentiellement placé au centre de la zone de points de vue ZPV. Ainsi toutes les réflexions et les spéculaires seront cohérents, pour un même point touché P, quelques soit la position du scanneur 3D qui l'enregistre.

En images de synthèses pré-calculées, la couleur d'un pixel n'est généralement pas calculée sur base d'un seul tir de rayon, mais plutôt d'une multitude de rayons dans la surface du pixel. Chaque rayon lancé pour un pixel correspond à un échantillon pour déterminer la couleur du pixel. Le multi-échantillonnage consiste donc à lancer plusieurs rayons pour le même pixel et faire une moyenne pondérée des couleurs obtenues pour chaque rayon de façon à déterminer la couleur finale du pixel. Le fait d'augmenter le nombre d'échantillons pour un pixel augmente nettement la qualité du rendu surtout dans les situations ou le pixel correspond au bord d'un objet.

De façon similaire, pour calculer la couleur d'un point touché P dans une direction, on peut améliorer la qualité de son rendu en multipliant les rayons de balayage à l'intérieur d'un même pas de balayage. La figure 10 illustre comment à l'aide de quatre autres rayons de balayage provenant du scanneur s et situé à l'intérieur d'un même pas de balayage, on peut déterminer d'autres points touché P1,P2,P3 et P4 dans l'espace. Les couleurs et les distances d des quatre autres points touchés ainsi obtenus par les quatre autres rayons de balayage pourraient être moyennés. Mais dans le cas de l'enregistrement des distances, cette moyenne pose un problème. En effet, les différents autres rayons de balayage peuvent toucher des objets 16 et 17 à des distances différentes.

Si l'on moyenne les distances, on obtient dans ce cas des distances de points qui ne correspondant à aucune surface dans l'espace scanné. Le problème est que selon un point de vue un peu différent, ces points moyennés vont poser problème car ils vont apparaître comme suspendu dans le vide. Ce point suspendu dans le vide est marqué d'un x dans la figure 10. Suivant l'exemple repris à la figure 10, P1 et P2 sont deux points échantillonnés d'un objet 16 de couleur bleu. P3 et P4 sont deux points échantillonnés d'un objet 17 de couleur rouge. Donc, la couleur du point x, si elle est déterminée en faisant simplement une moyenne des autres points touchés P1,P2,P3 et P4, sera mauve et sa position la moyenne des positions des points P1 et P2, et P3 et P4. Lorsque ce point x est regardé depuis une caméra placée au point source C, cela ne pose pas de problème. Depuis un autre point de vue D, le point x ne correspond pas à une géométrie existante dans l'espace scanné et ce point x va apparaître comme flottant dans l'air.

On peut bien entendu juste stocker les données d'images de tous ces autres points touchés mais au final cela correspondrait à augmenter la résolution du scanneur et donc à augmenter la quantité de données stockées.

De façon préférentielle, on utilise une méthode qui permet d'agréger correctement plusieurs autres points touchés qui, une fois moyennés du point de vue de leur distance, ne créent pas de points flottant dans l'air. Cette variation préférentielle, consiste à employer une méthode dite de « Clustering », qui regroupe les autres points touchés en différents groupes qui sont spatialement cohérents. Si on fait alors une moyenne sur la distance des autres points touchés d'un même groupe, on obtient une position spatiale qui est cohérente avec la géométrie existante dans l'espace scanné.

Plusieurs méthodes de « clustering » communément employées dans le cadre de l'intelligence artificielle sont possibles, comme par exemple la méthode dites des « k-means ».

On obtient au final un, deux ou trois groupes d'autres points touchés, et on peut moyenner les couleurs de ces autres points touchés au sein d'un groupe, ainsi que leur profondeur sans avoir de problèmes de points flottant dans l'air.

A partir des autres points touchés obtenus par les autres rayons de balayage on détermine un jeu de distances comprenant pour chaque autre point touché la distance entre cet autre point touché et le scanneur. On recherche ensuite parmi les distances dudit jeu de distances la distance minimale et la distance maximale.

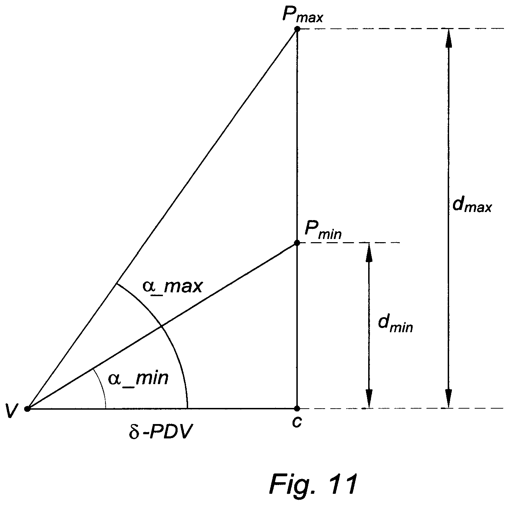

Ceci est par exemple illustré à la figure 11. Dans la mesure où l'utilisateur au moment de la visualisation restera dans le zone de point de vue ZPV, on peut calculer l'écart de distance maximale qu'il peut y avoir entre la position du point de vue de l'utilisateur et le centre de chaque scanneur, appelons cette distance ΔPDV (delta point de vue). A la figure 11 on note que C'est le centre du scanneur, V est la position du point de vue la plus éloigné possible dans la zone de vision par rapport au centre du scanneur, ΔPDV est la distance entre C et V. dmax correspond à la distance par rapport à C de l'autre point touché Pmax, le plus lointain. dmin correspond à la distance par rapport à C de l'autre point touché le plus proche Pmin, αmin correspond à l'angle formé entre la droite allant du point V au point C et la droite allant de V au point Pmin, amax est l'angle formé entre la droite allant du point V au point C et la droite allant de V au point Pmax, Δα est la différence d'angle entre amax et αmin. On peut dès lors calculer : αmin = arctangente (dmin/ΔPDV), αmax = arctangente (dmax/ΔPDV), et Δα = αmax - αmin..

Si les autres points touches sont situés dans une plage de distances par rapport au point C menant à une valeur de Δα qui serait inférieur à la moitié de la définition angulaire de l'affichage, la séparation en groupe des autres points touchés n'est pas nécessaire. En effet, dans tel cas, la différence de distance ne sera pas perçue depuis un quelconque point de la zone de points de vue et on détermine une moyenne pondérée des valeurs calculées pour ces autres points touchés et on substitue cette moyenne pondérée à la valeur de la donnée d'images stockée pour le point touché lors du pas de balayage considéré.

Si par contre une telle séparation en groupe est nécessaire on répartit en différents groupes sur base de leur position lesdits autres points touchés et on choisit selon un critère prédéterminé un groupe parmi ces différents groupes, le point touché pour le pas de balayage considéré étant déterminé par une moyenne pondérée des valeurs calculées pour ces autres points touchés dans le groupe sélectionné.

Le principe général est qu'un écart de 5 cm de profondeur à une distance de 1 Km ne sera pas discernable depuis un point de vue quelconque à l'intérieur de la zone de point de vue, par contre un écart de 5 cm à 50 cm de distance le sera fortement.

Un critère de sélection du groupe d'autre point touché peut être soit le nombre de points qui le constitue ou sa distance moyenne par rapport au centre du scanneur.

Pour un créer l'équivalent d'un mouvement de caméra dans la vidéo immersive selon l'invention, la zone de points de vue est de préférence déplacée dans l'espace à partir d'une première position initiale vers au moins une deuxième position située à une distance prédéterminée de cette première position. Le balayage par chacun des scanneurs du premier ensemble de scanneurs et la production et le stockage des données d'images de l'espace étant répété pour chaque deuxième position de la zone de points de vue après celui effectué pour la première position.

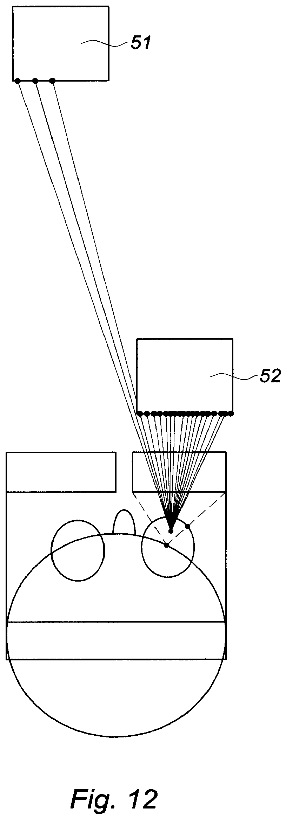

Une caractéristique de l'invention est que la densité des points touchés est cohérente avec la résolution angulaire de l'affichage. Comme illustré à la figure 12. Une surface 51 éloignée de la zone de point de vue ZPV présente seulement trois points touchés, alors qu'une surface plus proche 52 présente au moins cinq fois plus de points touchés. La densité des points touchés pour une surface éloignée est faible et les différents points touchés sont très écartés les uns des autres. La densité des points touchés sur la surface proche est beaucoup plus élevée, et donc elle est mieux définie. Ceci est cohérent avec la définition de l'affichage lors de la visualisation du film immersif avec parallaxe interactif selon l'invention.

La visualisation de la vidéo immersive avec parallaxe interactive, selon l'invention, comprend les étapes suivantes :
a) une détermination dans la zone de points de vue d'une position et d'une orientation des yeux de l'utilisateur par des capteurs et l'utilisation d'algorithmes de prédiction de mouvements de tête de l'utilisateur, pour déterminer ce qui sera visible par l'utilisateur;
b) une sélection sur base de la position et l'orientation des yeux de l'utilisateur des données d'images parmi les données d'images stockées nécessaires à la visualisation de la partie de l'espace scanné visible par l'utilisateur;
c) un chargement dans une mémoire temporaire des données d'images sélectionnées;
d) une production de deux images sur base des données d'images stockée dans la mémoire temporaire; et une présentation des deux images produites aux yeux de l'utilisateur.

L'Utilisateur, ayant un champ de vision restreint ne peut voir à un moment donné qu'une partie de l'espace scanné encodé par les données d'images.

De façon préférentielle, l'espace scanné est stockée sous une forme qui sépare en tranche les points touchés. Chaque tranche correspond à une tranche des directions de balayage. Par exemple une tranche peut encoder les points vus par les différents scanneurs correspondants aux azimuts de 0 à 45 degrés et des élévations de 90 à 125 degrés.

De très nombreuses méthodes ont été étudiées et peuvent être utilisées pour rendre les points touchés. Citons par exemple : Gaël Guennebaud, Loïc Barthe, Mathias Paulin : Interpolatory Refinement for Real-Time Processing of Point-Based Geometry, publiée dans. Eurographics 2005, Dublin, Ireland, vol 24, N°3.

De préférence on ne ré-éclaire pas le rendu des points touchés, les couleurs encodée dans les points sont directement celles qui vont être présentées à l'utilisateur, il n'y a pas de ré éclairage au moment de la visualisation.

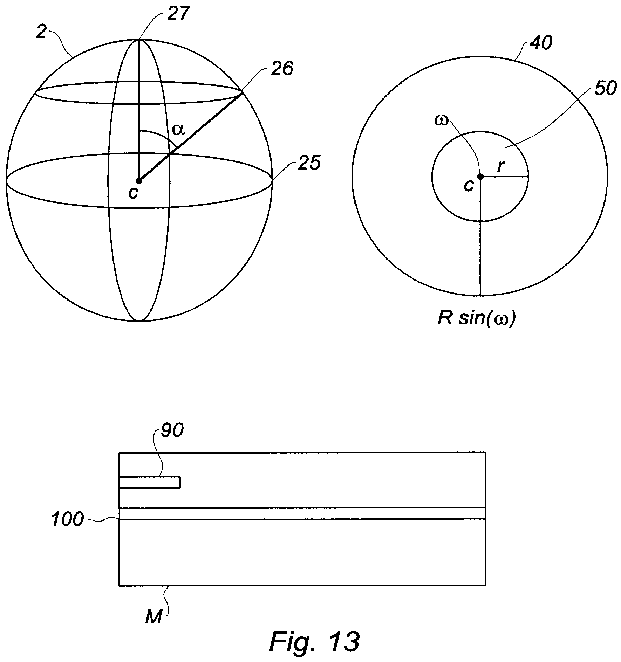

De préférence, le balayage des points est ecospherique, c'est-à-dire qu'il est adapté en fonction de l'angle d'élévation comme illustré à la figure 13. Les points aux pôles d'une sphère ne sont pas balayés avec le même pas angulaire d'azimut qu'à l'équateur, et cela pour éviter des points redondants et ainsi limiter le nombre de points à balayer. Le balayage avec le plus petit pas angulaire d'azimut sera réalisé à l'équateur, alors que dans les autres latitudes le balayage aura un pas angulaire d'azimut plus élevé. La méthode ecospherique garde le principe de l'encodage de la latitude en l'ordonnée de la matrice de stockage, et de la longitude en l'abscisse de la matrice de stockage, comme pour l'encodage équirectangulaire, mais le rapport entre l'azimut et l'abscisse n'est plus linéaire.

Donc, on calcule pour chaque ligne scannée (chaque élévation), la circonférence équivalente du cercle qui est représenté par cette ligne. Comme une ligne de la matrice de stockage représente une coupe horizontale de la sphère, cela donne un cercle sur le plan horizontal de coupe.

Cette circonférence est donc, sur base d'une sphère de rayon 1 de sin (α) ^{∗} 2 ^{∗} Pl. Avec a l'angle d'élévation en partant du pôle nord, c'est à dire au pôle nord α = 0 degrés, à l'équateur α =90 degrés et au pôle sud α = 180 degrés, le rapport de cette circonférence avec la circonférence à l'équateur est donc simplement de sin (α).

Chaque point sur une même ligne est écarté d'un même incrément d'angle Δβ. Mais cet incrément d'angle Δβ varie de ligne en ligne, de nouveau en rapport avec sin (α). Selon la formule: Δβ =360 degrés / ( nombre de colonnes de la matrice de stockage multipliée par sin (α)). On note que la totalité des colonnes de la matrice de stockage est uniquement employée à l'équateur, toutes les autres latitudes emploient moins de colonnes.

La méthode ecosphérique permet d'avoir une bonne homogénéité des surfaces correspondantes à chacun des points touchés de l'espace et couvre complètement toutes les directions de balayage.

A la figure 13 une tranche de la sphère correspondante à toutes les longitudes pour la latitude α=45° correspond au cercle 26. Le cercle 25 est la tranche de la sphère correspondant à toutes les longitudes pour la latitude correspondant à l'équateur (α = 90 degrés). La projection 40 est le cercle vu du haut correspondant à la latitude de l'équateur, son rayon par définition est de 1 et sa circonférence de 2 π, la projection 50 est le cercle vu du haut correspondant à la latitude α=45°, son rayon R est de sin (α) et sa circonférence de 2 π ^{∗} sin (α). W est le centre de la sphère, M est la matrice de stockage ecospherique correspondante. La ligne 90 est la bande de point touché correspondant à la latitude α=45°. On remarquera qu'elle ne prend pas toute les colonnes de la matrice M, en effet elle prend seulement un nombre de colonne défini par le nombre total de colonnes de M multiplié par sin (α). La ligne 100 est la bande de point touché correspondant à la latitude à l'équateur, qui elle prend toutes les colonnes de la matrice M.

La zone de points de vue ZPV peut être déplacée par le réalisateur de la vidéo tout comme il déplacerait une caméra à point de vue unique, comme illustré à la figure 16. Donc, contrairement à la réalité virtuelle ou, au moment du rendu en temps réel, une caméra est déplacée dans un espace virtuel lorsqu'il y a déplacement de l'utilisateur. Suivant l'invention c'est l'espace 3 qui bouge autour de l'utilisateur 1 lorsque la zone de points de vue ZPV a été déplacée lors de la création du film immersif.

On peut se représenter le système comme recréant autour de l'utilisateur 1 au moment de la visualisation, une scène virtuelle 3D pour chaque fraction de temps de la vidéo immersive. Chacune de ces scènes virtuelles éphémères se limite à ce que l'utilisateur 1 peut voir depuis la zone de points de vue ZPV prédéterminée. L'évolution de l'aspect de ces scènes correspond aux mouvements des objets et/ou des personnages dans la vidéo et au déplacement de la position de la zone de points de vue ZPV contrôlée par le réalisateur du film.

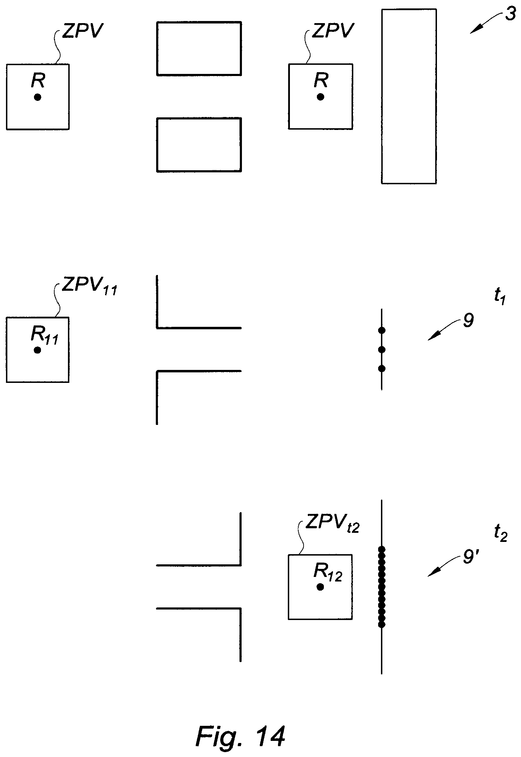

Ainsi, à la figure 14 une scène 3 est balayée à partir d'une première position de la zone de points de vue ZPV dans un premier temps t₁, et ensuite elle est à nouveau balayée à partir d'une deuxième position de la zone de points de vue ZPV dans un deuxième temps t₂. Donc, à t₁ un premier jeu de points touchés 9 est obtenu, et ensuite à t₂ un deuxième jeu de points touchés 9' est obtenu. Pour l'utilisateur 1 c'est la scène qui est déplacée.

Lors de la visualisation, il est intéressant de pouvoir mélanger des images de synthèse en temps réel aux images générés selon l'invention. Ainsi on peut par exemple ajouter un avatar formé par le corps de l'utilisateur, ou des avatars de corps d'autres utilisateurs physiquement présents ou pas. Il est également possible d'ajouter des éléments informatifs comme des textes ou des schémas en fonction de la direction du regard de l'utilisateur, ou des éléments ludiques, comme des cibles dynamiques. On peut également ajouter des publicités statiques ou dynamiques.

Lors de la lecture de la vidéo immersive selon l'invention, l'utilisateur peut être placé sur un système recréant des sensations d'accélérations, en conférant un mouvement à l'utilisateur.

La visualisation peut également être agrémentée d'une immersion sonore permettant d'avoir du son en trois dimensions avec par exemple des techniques classiques comme l' Ambisonic, le HRTF (Head Related Transter Function) et le Binaural.

## Revendications

1. Méthode pour collecter des données d'images destinées à produire une vidéo immersive, laquelle méthode comprend la mise en place d'un premier ensemble d'au moins n scanneurs (n>1), chacun agencés pour produire des rayons de balayage, laquelle méthode comprend également le balayage par chacun des scanneurs dudit premier ensemble de scanneurs à l'aide des rayons de balayage d'un espace prédéterminé pour produire les données d'images dudit espace, lesquelles données d'images sont stockées dans une mémoire, **caractérisée en ce qu'**une zone de points de vue est déterminée en délimitant un volume à partir duquel un utilisateur de la vidéo immersive sera en mesure de voir ledit espace et d'effectuer avec sa tête un mouvement, en particulier un mouvement de translation, à l'intérieur de la zone de points de vue, ladite zone de points de vue avant une taille qui correspond à une latitude de mouvement de tête que l'utilisateur a naturellement autour d'une position de repos, un deuxième ensemble de m (m>1) points source situés à des extrémités de la zone de points de vue étant ensuite déterminé, laquelle mise en place dudit premier ensemble d'au moins n scanneurs est réalisée en plaçant à chacun desdits points source chaque fois un desdits scanneurs du premier ensemble, ledit balayage dudit espace étant réalisé à l'aide desdits scanneurs placés sur les points source et en balayant pas à pas ledit espace suivant une succession d'une part d'angles d'azimut et d'autre part d'angles d'élévation situés chacun dans une plage prédéterminée par la zone de point de vue, laquelle production des données d'image est réalisée en collectant pour chaque rayon de balayage produit le rayon de balayage réfléchit par chaque fois un point touché situé dans ledit espace et touché par le rayon de balayage concerné et en déterminant lors de chaque pas et sur base du rayon de balayage réfléchit une distance (d) entre le point touché et le scanneur ayant produit le rayon de balayage concerné ainsi qu'un paramètre de couleur dudit point touché, lesdites données étant stockées dans la mémoire sous forme d'une matrice structurée selon les angles d'azimut et d'élévation.

2. Méthode suivant la revendication 1, **caractérisée en ce que** la zone de points de vue est formée par un volume essentiellement rectangulaire, en particulier un parallélépipède rectangle, ayant une hauteur d'au moins 30 cm, une profondeur d'au moins 30 cm et une largeur d'au moins 30 cm.

3. Méthode suivant la revendication 1, **caractérisée en ce que** la zone de points de vue est formée par un volume essentiellement en configuration d'octahedron.

4. Méthode suivant l'une des revendications 1 à 3, **caractérisée en ce que** les données stockées sont filtrées en déterminant pour chaque point touché par un scanneur si ce point est atteignable par un rayon lancé par au moins un autre desdits n scanneurs, et au cas où le point touché considéré est atteignable par un rayon lancé par au moins un autre desdits n scanneurs on détermine sur base d'un critère de sélection prédéterminé si les données stockées du point touché considéré doivent être éliminées des données stockées.

5. Méthode suivant la revendication 4, **caractérisée en ce que** ledit critère de sélection est basé sur l'aire de la surface scannée entre deux pas successifs de balayage suivant l'angle d'azimut et deux pas successifs de balayage suivant l'angle d'élévation par le scanneur ayant produit le point touché considéré et le ou les scanners parmi les n autres scanners pouvant atteindre le point touché considéré.

6. Méthode suivant la revendication 5, **caractérisée en ce qu'**un angle (β) entre la normale de la surface scannée et le rayon de balayage ayant produit le point touché est déterminé, l'aire de la surface étant déterminée sur base du carré de la distance (d) divisé par le cosinus de l'angle β et forme ledit critère de sélection, et **en ce qu'**on garde la donnée stockée liée à la valeur ayant la plus petite aire de la surface scannée.

7. Méthode suivant la revendication 4, **caractérisée en ce que** le critère de sélection est basé sur la distance entre le point touché et le scanneur ayant produit le point touché et la distance entre le point touché et le ou les scanners parmi les n autres scanners pouvant atteindre le point touché, la donnée stockée conservée étant celle du scanneur ayant mené à la plus petite distance.

8. Méthode suivant la revendication 4, **caractérisée en ce qu'**un ordre de priorité est préalablement attribuée à chacun des n scanneurs placés sur les points source, le critère de sélection étant basé sur cet ordre de priorité.

9. Méthode suivant l'une des revendications 1 à 8, **caractérisée en ce que** l'on utilise des scanneurs qui sont soit des scanneurs virtuels, soit des scanneurs physiques.

10. Méthode suivant l'une des revendications 1 à 9, **caractérisée en ce qu'**on adapte lesdits pas de balayages d'azimut en fonction de l'angle d'élévation.

11. Méthode suivant l'une des revendications 1 à 10, **caractérisée en ce qu'** à l'intérieur d'un même pas de balayage on produit plusieurs autres rayons de balayage et on détermine à l'aide des autres rayons de balayage d'autres points touchés, on détermine ensuite un jeu de distances comprenant pour chaque autre point touché la distance entre cet autre point touché et le scanneur, on recherche parmi les distances dudit jeu de distances la distance minimale et la distance maximale, et sur base d'un critère dépendant de cette distance minimale et maximale on détermine si une répartition desdits autres point touchés en différents groupes sur base de leur distances est nécessaire, si une telle répartition n'est pas nécessaire on détermine une moyenne pondérée des autres points touchés et on substitue cette moyenne pondérée à la valeur du donnée d'images stockée pour le point touché pour le pas de balayage considéré, si une telle répartition est nécessaire on répartit en différents groupes sur base de leur position lesdits autres point touchés et on choisit selon un critère prédéterminé un groupe parmi ces différents groupes, le point touché pour le pas de balayage considéré étant déterminé par une moyenne pondérée des autres points touchés dans le groupe sélectionné.

12. Méthode suivant l'une des revendications 1 à 11, **caractérisée en ce que** la zone de points de vue est déplacée dans ledit espace à partir d'une première position initiale vers au moins une deuxième position située à une distance prédéterminée de cette première position, le balayage par chacun des scanneurs dudit premier ensemble de scanneurs et la production et le stockage des données d'images dudit espace étant répété pour chaque deuxième position de la zone de points de vue après celui effectué pour la première position.

13. Méthode de visualisation d'au moins une partie de l'espace scanné sur base des données d'images collectées suivant la méthode selon l'une des revendications 1 à 12, **caractérisée en ce que** la méthode de visualisation comprend :
a) une détermination dans la zone de points de vue ayant une taille qui correspond à une une latitude de mouvement de tête que l'utilisateur a naturellement autour d'une position de repos d'une position et d'une orientation des yeux de l'utilisateur par des capteurs et l'utilisation d'algorithmes de prédiction de mouvements de tête de l'utilisateur, pour déterminer ce qui sera visible par l'utilisateur ;
b) une sélection sur base de la position et l'orientation des yeux de l'utilisateur des données d'images parmi les données d'images stockées nécessaires à la visualisation de la partie de l'espace scanné visible par l'utilisateur;
c) un chargement dans une mémoire temporaire des données d'images sélectionnées;
d) une production de deux images sur base des données d'images stockée dans la mémoire temporaire; et
e) une présentation des deux images produites aux yeux de l'utilisateur.

14. Méthode de visualisation selon la revendication 13, **caractérisée en ce que** la présentation des deux images à l'utilisateur est réalisée par l'intermédiaire d'un casque de réalité virtuelle.

15. Méthode de visualisation selon la revendication 13 ou 14, **caractérisée en ce qu'**elle est utilisée dans un dispositif dans lequel un mouvement est conféré à l'utilisateur, les coordonnées desdits mouvements conférés étant envoyées à un système de visualisation qui applique ladite méthode de visualisation pour synchroniser le déroulement des images avec lesdits mouvements.

## Patentansprüche

1. Verfahren zum Sammeln von Bilddatenelementen, die zum Erzeugen eines immersiven Videos bestimmt sind, wobei das Verfahren das Platzieren einer ersten Anordnung von mindestens n Scannern (n> 1) umfasst, die jeweils angeordnet sind, um Abtaststrahlen zu erzeugen, wobei dieses Verfahren auch das Abtasten eines vorbestimmten Raums durch jeden der Scanner der ersten Anordnung von Scannern mithilfe der Abtaststrahlen umfasst, um die Bilddatenelemente des Raums zu erzeugen, wobei die Bilddatenelemente in einem Speicher gespeichert werden, **dadurch gekennzeichnet, dass** ein Blickwinkelbereich durch Abgrenzen eines Volumens bestimmt wird, ausgehend von dem ein Benutzer des immersiven Videos diesen Raum sehen und mit seinem Kopf eine Bewegung, insbesondere eine Translationsbewegung, innerhalb des Blickwinkelbereichs ausführen kann, wobei der Blickwinkelbereich eine Größe hat, die einem Spielraum der Kopfbewegung entspricht, die der Benutzer natürlicherweise um eine Ruheposition hat, wobei eine zweite Anordnung von m (m> 1) Quellpunkten anschließend bestimmt wird, die sich an den Enden des Blickwinkelbereichs befinden, wobei die Platzierung der ersten Anordnung von mindestens n Scannern durchgeführt wird, indem an jedem der Quellpunkte jedes Mal einer der Scanner der ersten Anordnung platziert wird, wobei das Abtasten des Raums mithilfe der auf den Quellpunkten platzierten Scanner durchgeführt wird, und indem der Raum Schritt für Schritt entlang einer Abfolge einerseits von Azimutwinkeln und andererseits von Elevationswinkeln, die sich jeweils innerhalb eines durch den Blickwinkelbereich vorbestimmten Bereichs befinden, abgetastet wird, wobei die Erzeugung der Bilddatenelemente durchgeführt wird, indem für jeden erzeugten Abtaststrahl der Abtaststrahl gesammelt wird, der durch je einen berührten Punkt wiedergespiegelt wird, der sich in dem Raum befindet und von dem betroffenen Abtaststrahl berührt wird, und indem während jedes Schritts und auf der Basis des wiedergespiegelten Abtaststrahls ein Abstand (d) zwischen dem berührten Punkt und dem Scanner, der den betroffenen Abtaststrahl erzeugte, sowie ein Farbparameter des berührten Punkts bestimmt wird, wobei die Datenelemente in dem Speicher in Form einer Matrix gespeichert werden, die gemäß den Azimut- und Elevationswinkeln strukturiert ist.

2. Verfahren nach Anspruch 1, **dadurch gekennzeichnet, dass** der Blickwinkelbereich durch ein im Wesentlichen rechteckiges Volumen, insbesondere ein rechteckiges Parallelepiped mit einer Höhe von mindestens 30 cm, einer Tiefe von mindestens 30 cm und einer Breite von mindestens 30 cm gebildet wird.

3. Verfahren nach Anspruch 1, **dadurch gekennzeichnet, dass** der Blickwinkelbereich durch ein Volumen im Wesentlichen in der Oktaederkonfiguration gebildet wird.

4. Verfahren nach einem der Ansprüche 1 bis 3, **dadurch gekennzeichnet, dass** die gespeicherten Datenelemente gefiltert werden, indem für jeden von einem Scanner berührten Punkt bestimmt wird, ob dieser Punkt durch einen Strahl erreichbar ist, der von mindestens einem anderen der n Scanner geworfen wird, und wobei für den Fall, dass der betroffene berührte Punkt durch einen Strahl erreichbar ist, der von mindestens einem anderen der n Scanner geworfen wird, auf der Grundlage eines vorbestimmten Auswahlkriteriums bestimmt wird, ob die gespeicherten Datenelemente des betroffenen berührten Punkts aus den gespeicherten Datenelementen entfernt werden müssen.

5. Verfahren nach Anspruch 4, **dadurch gekennzeichnet, dass** das Auswahlkriterium auf der Fläche der Oberfläche basiert, die zwischen zwei aufeinanderfolgenden Abtastschritten entlang des Azimutwinkels und zwei aufeinanderfolgenden Abtastschritten entlang des Elevationswinkels durch den Scanner, der den betroffenen berührten Punkt erzeugte, und den/die Scanner unter den n anderen Scannern, die den betroffenen berührten Punkt erreichen können, gescannt wurde.

6. Verfahren nach Anspruch 5, **dadurch gekennzeichnet, dass** ein Winkel (β) zwischen der Normalen der gescannten Oberfläche und dem Abtaststrahl, der den berührten Punkt erzeugte, bestimmt wird, wobei die Fläche der Oberfläche auf der Basis des Quadrats des Abstands (d) geteilt durch den Kosinus des Winkels β bestimmt wird und das Auswahlkriterium bildet, und dass das gespeicherte Datenelement, das mit dem Wert verbunden ist, der die kleinste Fläche der gescannten Oberfläche hat, behalten wird.

7. Verfahren nach Anspruch 4, **dadurch gekennzeichnet, dass** das Auswahlkriterium auf dem Abstand zwischen dem berührten Punkt und dem Scanner, der den berührten Punkt erzeugte, und dem Abstand zwischen dem berührten Punkt und dem/den Scannern unter den n anderen Scannern, die den berührten Punkt erreichen können, basiert, wobei das gespeicherte Datenelement dasjenige des Scanners ist, das zu dem kleinsten Abstand führte.

8. Verfahren nach Anspruch 4, **dadurch gekennzeichnet, dass** eine Prioritätsreihenfolge jedem der n Scanner, die an den Quellpunkten platziert sind, zuvor zugewiesen wird, wobei das Auswahlkriterium auf dieser Prioritätsreihenfolge basiert.

9. Verfahren nach einem der Ansprüche 1 bis 8, **dadurch gekennzeichnet, dass** Scanner verwendet werden, die entweder virtuelle Scanner oder physische Scanner sind.

10. Verfahren nach einem der Ansprüche 1 bis 9, **dadurch gekennzeichnet, dass** die Azimutabtastschritte als Funktion von dem Elevationswinkel angepasst werden.

11. Verfahren nach einem der Ansprüche 1 bis 10, **dadurch gekennzeichnet, dass** innerhalb eines einzelnen Abtastschritts mehrere weitere Abtaststrahlen erzeugt werden und andere berührte Punkte mit Hilfe der anderen Abtaststrahlen bestimmt werden, wobei dann ein Satz von Abständen bestimmt wird, der für jeden anderen berührten Punkt den Abstand zwischen diesem anderen berührten Punkt und dem Scanner umfasst, wobei unter den Abständen des Satzes von Abständen der minimale Abstand und der maximale Abstand gesucht werden, und wobei auf der Basis eines Kriteriums in Abhängigkeit von diesem minimalen und maximalen Abstand bestimmt wird, ob eine Verteilung der anderen berührten Punkte in verschiedene Gruppen auf der Grundlage ihrer Abstände erforderlich ist, wobei, wenn eine solche Verteilung nicht erforderlich ist, ein gewichteter Durchschnitt der anderen berührten Punkte bestimmt wird und dieser gewichtete Durchschnitt durch den Wert des Bilddatenelements ersetzt wird, der für den berührten Punkt für den betroffenen Scanschritt gespeichert wurde, wobei, wenn eine solche Aufteilung erforderlich ist, die anderen berührten Punkte in verschiedene Gruppen auf Basis ihrer Position aufgeteilt werden und eine Gruppe aus diesen verschiedenen Gruppen gemäß einem vorbestimmten Kriterium ausgewählt wird, wobei der berührte Punkt für den betroffenen Betrachtungsschritt durch einen gewichteten Durchschnitt der anderen berührten Punkte in der ausgewählten Gruppe bestimmt wird.

12. Verfahren nach einem der Ansprüche 1 bis 11, **dadurch gekennzeichnet, dass** der Blickwinkelbereich in dem Raum ausgehend von einer ersten Anfangsposition zu mindestens einer zweiten Position bewegt wird, die sich in einem vorbestimmten Abstand von dieser ersten Position befindet, wobei das Abtasten durch jeden der Scanner der ersten Anordnung von Scannern und die Erzeugung und Speicherung von Bilddatenelementen des Raums für jede zweite Position des Blickwinkelbereichs wiederholt werden, nachdem dies für die erste Position durchgeführt wurde.

13. Verfahren zur Visualisierung von mindestens einem Teil des gescannten Raums auf der Basis von Bilddatenelementen, die gemäß dem Verfahren nach einem der Ansprüche 1 bis 12 gesammelt wurden, **dadurch gekennzeichnet, dass** das Verfahren zur Visualisierung umfasst:
a) eine Bestimmung einer Position und einer Orientierung der Augen eines Benutzers in den Sichtbereich, der eine Größe hat, die einem Spielraum der Kopfbewegung entspricht, die der Benutzer normalerweise um seine Ruheposition hat, durch Sensoren und die Verwendung von Algorithmen zur Vorhersage der Kopfbewegung des Benutzers, um zu bestimmen, was für den Benutzer sichtbar sein wird;
b) eine Auswahl der Bilddatenelemente anhand der Position und Ausrichtung der Augen des Benutzers aus den gespeicherten Bilddatenelementen, die zur Visualisierung des für den Benutzer sichtbaren Teils des gescannten Raums erforderlich sind;
c) eine Ladung der ausgewählten Bilddatenelemente in einen temporären Speicher;
d) eine Erzeugung von zwei Bildern auf der Basis von den in dem temporären Speicher gespeicherten Bilddatenelementen; und
e) eine Darstellung der beiden erzeugten Bilder für die Augen des Benutzers.

14. Verfahren zur Visualisierung nach Anspruch 13, **dadurch gekennzeichnet, dass** die Darstellung der beiden Bilder für den Benutzer mittels eines Virtual-Reality-Headsets erfolgt.

15. Verfahren zur Visualisierung nach Anspruch 13 oder 14, **dadurch gekennzeichnet, dass** es in einer Vorrichtung verwendet wird, in der auf den Benutzer eine Bewegung übertragen wird, wobei die Koordinaten der übertragenen Bewegungen an ein Visualisierungssystem gesendet werden, das das Verfahren zur Visualisierung anwendet um das Abspielen der Bilder mit diesen Bewegungen zu synchronisieren.

## Claims

1. A method for collecting image data destined for producing an immersive video, which method comprises a setting up of a first set of at least n (n>1) scanners, each being provided for producing scanning beams, which method also comprises the scanning of a predetermined space by each of the scanners of said first set of scanners by means of scanning beams for producing the image data of said space, which image data are stored in a memory, **characterised in that** a zone of viewpoints is determined by delimiting a volume from which a user of the immersive video will be able to see said space and to perform with his head a movement, in particular a translation movement, inside the zone of viewpoints, said zone of viewpoints having a dimension which corresponds to a head movement latitude which the user naturally has around a rest position, a second set of m (m>1) source points located at the ends of the zone of viewpoints being thereafter determined, which setting up of said first set of at least n scanners being realised by placing at each of said source points each time one of said scanners of said first set, said scanning of said space being realised by means of said scanners placed at said source points and by scanning step by step said space according to a succession of at the one hand azimuth angles and on the other hand elevation angles each located in a range predetermined by said zone of viewpoints, which production of image data is realised by collecting for each produced scanning beam the scanning beam reflected by each time a touched point situated within said space and touched by the concerned scanning beam and by determining by each step and on the basis of the reflected scanning beam a distance (d) between the touched point and the scanner having produced the concerned scanning beam as well as a colour parameter of said touched point, said data being stored in the memory in the form of a matrix structured according to the azimuth and elevation angles.

2. The method according to claim 1, **characterised in that** the zone of viewpoints is formed by an essentially rectangular volume, in particular a rectangular parallelepiped, having a height of at least 30 cm, a depth of at least 30 cm and a width of at least 30 cm.

3. The method according to claim 1, **characterised in that** the zone of viewpoints is formed by a volume essentially octahedron shaped.

4. The method according to anyone of the claims 1 to 3, **characterised in that** the stored data are filtered by determining for each point touched by a scanner if that point can be reached by a beam launched by at least one other of said n scanners, and in case where the considered touched point can be reached by a beam launched by at least another of said n scanners it is determined on the basis of a predetermined selection criteria if the stored data of the considered touched point have to be eliminated from the stored data.

5. The method according to claim 4, **characterised in that** said selection criteria is based on the area of the surface scanned between two successive scanning steps according to the azimuth angle and two successive scanning steps according to the elevation angle by the scanner having produced the considered touched point and the single or several scanners among the other scanners being able to reach the considered touched point.

6. The method according to claim 5, **characterised In that** an angle (β) between a line perpendicular to the scanned surface and the scanning beam having produced the touched point is determined, the surface area being determined on the basis of the square of the distance (d) divided by the cosines of the angle β and forms the selection criteria, and **in that** the data stored with the value having the smallest scanned area is kept.

7. The method according to claim 4, **characterised in that** the selection criteria is based on the distance between the touched point and the scanner having produced the touched point and the distance between the touched point and the single or several scanners among the n other scanners being able to reach the touched point, the saved stored data being the one of the scanner having provided the smallest distance.

8. The method according to claim 4, **characterised in that** a priority order is established beforehand for each of the n scanners placed on the point sources, the selection criteria being based on said priority order.

9. The method according to anyone of the claims 1 to 8, **characterised in that** scanners which are used are either virtual scanners, or physical scanners.

10. The method according to anyone of the claims 1 to 9, **characterised in that** the azimuth scanning steps are adapted In function of the elevation angle.

11. The method according to anyone of the claims 1 to 10, **characterised in that** inside a same scanning step several other scanning beams are produced and other touched points are determined by means of said other scanning beams, thereafter there being determined a set of distances comprising for each other touched point the distance between that other touched point and the scanner, a minimum and a maximum distance are searched among those distances of said set of distances, and on the basis of a criteria depending of that minimum and maximum distance it is determined if a distribution of said other touched points In different groups on the basis of their distance is necessary, if such a distribution is not necessary a weighted average of the other touched points is computed and this weighted average is substituted for the value of the stored image data for the touched point for the considered scanning step, if such a distribution is necessary said other touched points are distributed in different groups on the basis of their position and a group is selected according to a predetermined criteria among the different groups, the touched point for the considered scanning step being determined by a weighted average of the other touched points in the selected group.

12. The method according to anyone of the claims 1 to 11, **characterised in that** the zone of viewpoints is shifted in said space from a first initial position towards at least a second position situated at a predetermined distance of the first position, the scanning by each of the scanners of said first set and the production and storage of the image data of said space being repeated for each second position of the zone of viewpoints after the one realised for the first position,

13. A visualisation method of at least a part of the scanned space on the basis of image data collected according to the method according to anyone of the claims 1 to 12, **characterised in that** the method comprises the steps of:
a) a determination within the zone of viewpoint having a dimension which corresponds to a head movement latitude which the user naturally has around a rest position of a position and an orientation of the eyes of a user by means of sensors and the use of an algorithm predicting the head movement of the user, for determining what will be seen by the user;
b) a selection on the basis of the position and orientation of the eyes of the user of image data among the stored image data necessary for visualising of the part of the space which can be seen by the user;
c) a loading in a temporary memory of the selected image data;
d) a production of two images on the basis of the image data stored in the temporary memory; and
e) a display to the user's eyes of the two produced images.

14. The method according to claim 13, **characterised in that** the display of two images to the user is realised by means of a virtual reality headset.

15. The method according to claim 13 or 14, **characterised in that** it is used in a device in which a movement is conferred to a user, the coordinates of said conferred movement being sent to a visualisation system which applies said visualisation method for synchronising the flow of images with said movements.
